Europäisches Patentamt

European Patent Office

Office européen des brevets

(19)

(11) **EP 1 144 985 B1**

(12) **EUROPEAN PATENT SPECIFICATION**

(45) Date of publication and mention
of the grant of the patent:
**12.05.2004 Bulletin 2004/20**

(51) Int Cl.[7]: **G01N 22/00**

(86) International application number:
**PCT/GB2000/000168**

(21) Application number: **00901193.3**

(22) Date of filing: **24.01.2000**

(87) International publication number:
**WO 2000/043759 (27.07.2000 Gazette 2000/30)**

(54) **APPARATUS AND METHOD FOR DETERMINING DIELECTRIC PROPERTIES OF AN ELECTRICALLY CONDUCTIVE FLUID**

VORRICHTUNG UND VERFAHREN ZUR BESTIMMUNG DER DIELEKTRISCHEN EIGENSCHAFTEN EINES ELEKTRISCH LEITENDEN FLUIDS

APPAREIL ET PROCEDE DE DETERMINATION DES CARACTERISTIQUES DIELECTRIQUES D'UN FLUIDE ELECTRIQUEMENT CONDUCTEUR

(84) Designated Contracting States:
**AT BE CH CY DE DK ES FI FR GB GR IE IT LI LU MC NL PT SE**

(30) Priority: **22.01.1999 GB 9901304**

(43) Date of publication of application:
**17.10.2001 Bulletin 2001/42**

(73) Proprietor: **THE UNIVERSITY OF LIVERPOOL**
**Liverpool L69 3BX (GB)**

(72) Inventors:
• **LUCAS, James**
  **Liverpool L23 7XA (GB)**

• **AL-SHAMMAA, Ahmed Uni. Liverpool**
  **Liverpool L69 3JG (GB)**

(74) Representative: **W.P. THOMPSON & CO.**
**Coopers Building,**
**Church Street**
**Liverpool L1 3AB (GB)**

(56) References cited:
EP-A- 0 216 474        EP-A- 0 511 651
US-A- 4 289 020        US-A- 5 157 339
US-A- 5 373 244        US-A- 5 754 055

**Description**

The present invention is concerned, in its broadest aspect, with an apparatus for and method of determining dielectric properties of an electrically conductive fluid. The invention is applicable in particular to the monitoring of multi-phase flows such as are found in oil pipelines.

The flow of material from an oil well typically contains not only crude oil but also other constituents, gas and water generally being the most significant of these. Other constituents such as sediment and algae are typically present in relatively small quantities. It is often necessary to monitor the relative proportions of the major constituents of the flow. One reason for this is to judge when a given well is becoming exhausted, signalled by a decline in the proportion of oil.

The traditional technique for this monitoring has involved separation of a sample of the material into its constituents, allowing straightforward single phase monitoring techniques to be used. While effective, processing systems based on this technique are somewhat inflexible in terms of their capability to handle fluctuating flow rates, varying water content and changes in the physical properties of the constituent fluids.

The technique also involves an undesirable time lag between extraction of the material at the well head and assessment of its constituents, not least because the assessment has to be made after separation of the materials on the rig itself - ie. a considerable distance downstream of the well head.

For these reasons numerous projects have been undertaken to develop systems capable of real time multi-phase metering (MPM) - ie. real time measurement of the constituents of a sample (more specifically a flow) containing two or more constituents. The aim of such projects has been to arrive at a system capable of monitoring the proportions of oil, gas and water in an extraction pipeline. Such systems are now commercially available, but are not yet wholly satisfactory.

Such systems operate by monitoring bulk properties of the flow (without separating it into its constituent parts) and inferring from these the proportions of the major constituents of the flow - in the practical case of oil extraction, the major constituents are oil, gas and water.

To enable such inferences to be made, more than one property of the flow is monitored. Known systems typically measure the density of the flow material, its effect in attenuating gamma rays, and one other flow property such as its capacitance.

In tests, most existing systems prove to be capable of accurately measuring two phases - fluid and gas - but fail to achieve the desired accuracy in relation to flows having high water or low gas content when measuring three phase flows - oil, gas and water.

It is one of the objects of the present invention to make possible improved monitoring of three phase flows.

It is considered that in order to improve the accuracy of MPM devices it is important to monitor a third bulk property of the flow (aside from density and gamma ray attenuation) and that as yet no appropriate technique has been proposed for accurately monitoring an appropriate property.

The reason for the need for a third property measurement may be simply stated. It is necessary in a three phase flow to establish three unknown quantities - the proportions of the three constituents (eg. oil, gas and water). To this end, three simultaneous equations, one contributed by each monitored property, are required.

There has been at least one project which attempted to monitor, as the necessary third property, the effect of the flow on the propagation of electromagnetic radiation through it. This project faced an important problem. Flows emerging from an oil well head are electrically conductive due, among other factors, to their inclusion of salt water. Conventional technical teaching, based on the application of Maxwell's equations, is that electromagnetic radiation of wavelengths cannot be efficiently propagated through a conductive medium

The solution adopted by the previous project was to use high power electromagnetic radiation. To provide this power it was necessary to use a magnetron, which operated at a power of the order of 1 Kilowatt. and at a frequency of 2.46 GHz. Due to the use of a magnetron to supply this radiation, its frequency was non-adjustable. The radiation was input to a resonant cavity, through which the flow was passed. The cavity walls were conductive and were exposed to the flow itself. Due to the resonance requirement, the dimensions of the cavity were largely fixed as a function of the (fixed) frequency used.

Coupling of the microwave radiation into the cavity was achieved by an aerial, necessarily very large, which was itself exposed to the contents of the cavity - ie. to the flow.

The device unfortunately proved unsatisfactory due to factors including the size and expense of the magnetron used and its fixed frequency.

Despite these problems, it is recognised that measurement of the properties of the flow with regard to electromagnetic radiation is desirable since the properties of the three major constituents of the flow with regard to EM radiation are widely. divergent, and hence easy to distinguish. This can be appreciated from the fact that the relative permittivity of the three constituents is approximately as follows:

I. gas, $\in$r = 1;
ii. crude oil, $\in$r= 2.2 (and this proves to be largely constant for all crude oils, despite variations in its component fractions);
iii. water, $\in$r = 81.

The inventors have realised, and confirmed by experiment, that contrary to the hitherto conventional teaching, it is possible to efficiently couple radio and microwave radiation into a conductive medium within a resonant cavity provided that the cavity walls and the antenna used to output the radiation are electrically isolated from the medium itself.

There is already known from EP-A-511651 a non-invasive, in-line fluid monitor which includes a length of fluid pipe disposed such that it and the fluid within becomea part of the dielectric loading on an energised electromagnetic sensor device. A resonant closed cavity is used to encompass the length of fluid pipe and a process is used to compare changes in the resonant characteristics of the cavity to predetermined data to determine the properties of the fluid. The cavity is in the form of an open, five walled box of an electrically conductive metal, such as copper or brass, having a separable metal lid forming a sixth side to achieve the closed cavity through which the fluid pipe passes. In this arrangement, therefore the fluid flow is confined to the fluid pipe.

In accordance with a first aspect of the present invention, there is provided an apparatus for determining dielectric properties of an electrically conductive liquid, comprising:-

an electromagnetically resonant cavity defined by an electrically conductive boundary wall;
an electrically insulating layer disposed on those parts of the electrically conductive boundary wall defining the interior wall of the cavity;
an inlet through which the fluid can be introduced into the interior of the cavity, said electrically insulating layer isolating the fluid from said electrically conductive boundary wall;
an emitter antenna and associated drive electronics for emitting electromagnetic radiation to the cavity, the emitter antenna being electrically isolated from fluid material within the cavity; and
means for detecting resultant electromagnetic radiation within the cavity.

Experiments carried out by the inventors have confirmed that using such an arrangement measurements of dielectric properties can be made without the need for the high power provided by a magnetron. The arrangement can serve as a dielectric permittivity sensor. Dielectric properties at radio and microwave frequencies can be measured. In prototype arrangemeats, a simple loop aerial driven by an electronic oscillator has proved adequate by virtue of the efficient propagation of radiation through the fluid material made possible by the arrangement. As compared with the previous magnetron apparatus, this makes possible great simplification and cost saving, as well as other benefits which will become clear below.

The fluid in question may contain some solids, as typically does a flow of material in an oil extraction pipeline.

With regard to the frequency of radiation emitted into the cavity, it is considered that the present invention is particularly applicable to radio and microwave frequencies. The frequency range used is in part determined by the resonance requirement and hence the cavity dimensions. It is currently believed potentially worthwhile to measure the response to frequencies of the order of 10 MHz to 10GHz. Research to date has usefully concentrated on the narrower range from approximately 100MHz to approximately 5GHz.

It is particularly preferred that the drive electronics are adapted to operate at a range of frequencies such that a range of frequencies of electromagnetic radiation can be emitted to the cavity. Preferably, the frequency is continuously variable.

This can be conveniently achieved in apparatus according to the present invention since the radiation does not need to be at the high power provided by the magnetron of the previous system.

In prototype arrangements embodying the present invention, a spectrum analyser has been used to drive a loop aerial at a continuously variable frequency. In this way, it becomes possible to measure the properties of the cavity and the material it contains throughout a chosen region of the electromagnetic spectrum.

The antenna for emitting electromagnetic radiation into the fluid material is preferably disposed within the resonant cavity such as to project into the fluid material, the antenna being provided with an insulating layer by which it is electrically isolated from the fluid material.

Such an arrangement provides for efficient coupling of the electromagnetic radiation into the fluid material.

The conductive boundary of the resonant cavity may comprise a conductive wall whose inner surface is covered by an internal insulating layer by which the wall is electrically isolated from the fluid material within the cavity. The insulating layer may be a low loss dielectric. Ceramic can be used.

It is particularly preferred that the resonant cavity has an inlet and an outlet such that the fluid material can flow through the cavity. This makes it possible to monitor, continuously if required, the properties of a fluid flow.

In a currently preferred embodiment of the present invention, the means for detecting electromagnetic radiation within the cavity comprise a receiver antenna disposed within the resonant cavity and electrically isolated from the fluid material within the cavity.

Alternatively or additionally, the means for detecting electromagnetic radiation within the cavity may comprise electronics connected to the emitter antenna for measuring the voltage standing wave ratio. The effect is to provide an indication of the reflected power at the emitter antenna.

In accordance with a second aspect of the present invention, there is provided a device for monitoring the constituents of a fluid flow, the device comprising an apparatus according to the first embodiment of the present invention. Of particular importance is the case where the device is adapted for monitoring the constituents of a flow of material in an oil pipeline. Multiphase metering can be carried out by such a device.

In such an embodiment, the resonant cavity may be formed by a portion of the pipeline. Preferably, the electrically conductive boundary defining the resonant cavity comprises a conductive circumferential wall around the inside or outside of the pipeline. The boundary may additionally comprise conductive end walls disposed across the pipeline to functionally enclose the resonant cavity. It is not considered essential that these end walls be continuous - they may for example be formed by open wire grid or mesh, serving to form a functionally enclosed resonant electrical cavity while permitting flow of material through the pipeline. Alternatively, the cavity may be open ended. It is found that circular resonance modes persist even when the cavity is not enclosed.

The device may for example be installed in a pipeline close to the point of extraction, serving to monitor in real time the properties of the material being extracted.

It is particularly preferred that the device comprises measurement electronics for determining the frequency of a resonance peak corresponding to a selected resonant mode within the cavity.

As will be explained below, it has been found that the frequency of such a resonance peak is shifted according to the proportions of different materials in the fluid flow, and that the frequency provides information which can be used in determining, or at least estimating, the proportions of different materials in the flow.

The device preferably comprises means for measuring additional properties of the fluid flow and calculating means for determining, on the basis of the measured properties, the proportions of certain constituents of the flow. The additional properties measured may comprise absorption of gamma ray radiation and density.

In a preferred embodiment, the calculating means operates by calculating for a set of possible permutations of flow constituents the expected values of the measured properties and comparing these with the actual measured values to determine which permutation best matches the measured properties.

The calculating means may comprise a neural network, trained on experimental data, for determining expected quantities relating to the dielectric properties of the flow corresponding to the permutations of flow constituents. The quantities in question may be the frequencies of a selected resonant mode of the cavity.

In accordance with a third aspect of the present invention, there is a method of determining dielectric properties of an electrically conductive fluid comprising the steps of disposing the fluid material in or passing the fluid through an apparatus in accordance with the first aspect of the invention, emitting electromagnetic radiation into the resonant cavity by means of the antenna which is electrically isolated from the fluid and detecting and analysing the resultant electromagnetic radiation within the resonant cavity.

Preferably, the method comprises varying the frequency of the emitted electromagnetic radiation and obtaining an indication of the amplitude of the resultant electromagnetic radiation within the resonant cavity. The frequency variation may be continuous. The results are preferably analysed to determine the position of at least one resonance peak within the cavity.

Detection of electromagnetic radiation within the resonant cavity may, in a preferred embodiment of the method according to the present invention, be by means of a receiver antenna itself electrically isolated from the fluid material. Alternatively or additionally it may be by analysis of the voltage standing wave ratio in the emitter antenna.

In a particularly preferred version of the method according to the present invention, the determined dielectric properties are utilised to monitor the constituents of a fluid flow passed through the resonant cavity.

Preferably such a method comprises additionally monitoring further properties of the fluid flow. Gamma ray radiation absorbtion and density are suitable properties.

The method preferably comprises calculating for a set of possible proportions of flow constituents the expected values of the measured properties and comparing these with the measured values to determine which best matches the measured properties.

Specific embodiments of the present invention will now be described, by way of example only, with reference to the accompanying drawings, in which:-

Figure 1 is a longitudinal section through a prototype resonant cavity apparatus embodying the present invention;
Figure 2 is a graph showing the amplitude (measured in millivolts) of a signal detected by an aerial within the cavity against the frequency (measured in megahertz) of a microwave signal input to the cavity, in the case where the cavity is filled with gas;
Figure 3 corresponds to Figure 2 but represents the case where the cavity is filled with oil;
Figure 4 corresponds to Figure 2 but represents the case where the cavity is filled with water;
Figure 5 is a graph having the same axes as Figure 2 (albeit with different ranges) on which signal amplitudes corresponding to cavities filled with gas, oil and water are juxtaposed;
Figure 6 is a table of observed fundamental resonance frequencies of the cavity corresponding to a range of cavity contents;

Figure 7 is a graph of the results for oil/gas mixtures tabulated in Figure 6 showing resonant frequency in MHz on the vertical axis against, on the horizontal axis, the percentage of oil (the upper row of figures along this axis) and the percentage of gas (the lower row of figures on this axis);

Figure 8 corresponds to Figure 7 except that the results shown are for water/gas mixtures, the percentage of water being indicated by the upper row of figures on the horizontal axis and the percentage of gas being indicated by the lower row of figures;

Figure 9 corresponds to Figure 7 except that the results shown are for water/oil mixtures, the percentage of water being indicated by the upper row of figures along the horizontal axis and the percentage of oil being indicated by the lower row of figures;

Figure 10 corresponds to Figure 7 except that the results shown are for a range of admixtures of gas with an equal volumetric mixture of oil and water, the percentage of gas being indicated by the upper row of figures along the horizontal axis and the percentage of oil/water being indicated by the lower row of figures;

Figure 11 is a graph showing four plots of detected signal amplitude variation with frequency for a mixture of water and air whose relative volumetric proportions were fixed throughout, each plot corresponding to a different rate of flow of the mixture through the apparatus;

Figure 12 is a graph showing how the detected signal amplitude (in volts on the vertical axis) is altered by an admixture of sand within the cavity over a range of frequencies;

Figure 13 illustrates elements of a neural network for use in an embodiment of the present invention;

Figure 14 shows the inputs to, and outputs from, the neural network during its training;

Figure 15 is a block diagram of a system utilising the neural network to infer the proportions of the constituents of a flow through the microwave cavity;

Figure 16 is a longitudinal section through a resonant cavity apparatus embodying the present invention for use in an oil pipeline;

Figure 17 is a graph of voltage standing wave ratio (VSWR) against frequency (MHz)at the transmitter antenna of an apparatus embodying the present invention for cavities filled with oil, gas and water, values for oil being indicated by a solid triangle, values for water being indicated by a solid square and values for gas being indicated by a phantom triangle; and

Figure 18 is a graph of frequency (in Mhz on the horizontal axis) against phase shift (in degrees on the vertical axis).

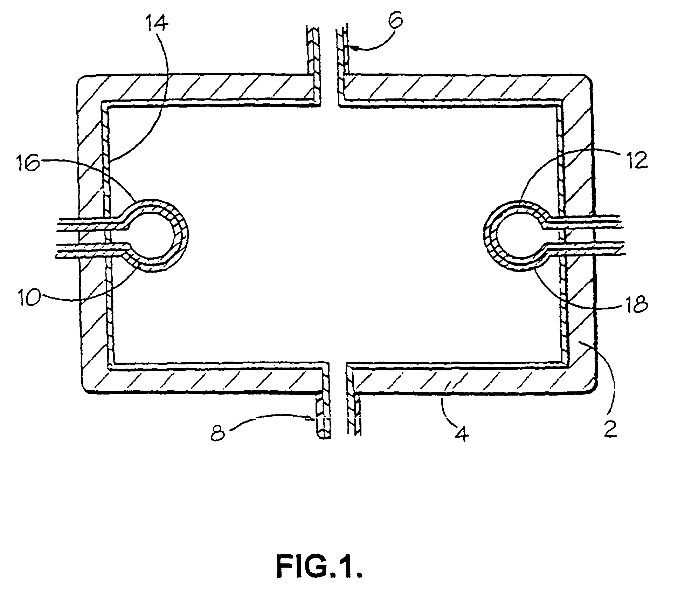

The prototype apparatus illustrated in Fig. 1 has been used for proving the feasibility of the present invention. The apparatus comprises a cylindrical microwave cavity defined by copper side and end walls, 2, 4 and having an axial inlet 6 and outlet 8 by means of which flow material can be passed through the cavity. The cavity had, in this prototype device, a length of 158mm and a diameter of 189mm. There is however scope for variation of the shape and dimensions of the cavity. In the experimental arrangement illustrated, a pump (not seen) is used to circulate the test medium and so provide a flow.

Within the cavity is a first loop aerial 10 serving as a microwave transmitter and a second loop aerial 12 serving as a microwave receiver.

An important feature of the apparatus is an electrical insulation layer 14 provided on the interior of the cavity walls to electrically isolate the cavity walls from the cavity's interior. Further insulation layers 16, 18 are provided on the transmitter aerial 10 and the receiver aerial 12, which are thereby also electrically isolated from the interior of the cavity.

Experiments carried out using the prototype apparatus have confirmed that by virtue of the electrical isolation of the cavity and aerials from the cavity contents, it becomes possible to efficiently couple electromagnetic radiation into the medium and to detect the radiation, even where the power of the emitted radiation is low. In the prototype apparatus, both aerials are connected to a spectrum analyzer used both to drive the transmitter aerial 10 at a range of test frequencies and to detect and store the corresponding signal amplitudes detected by the receiver aerial 12. In this way, it is possible to measure and plot the full microwave spectrum of the cavity.

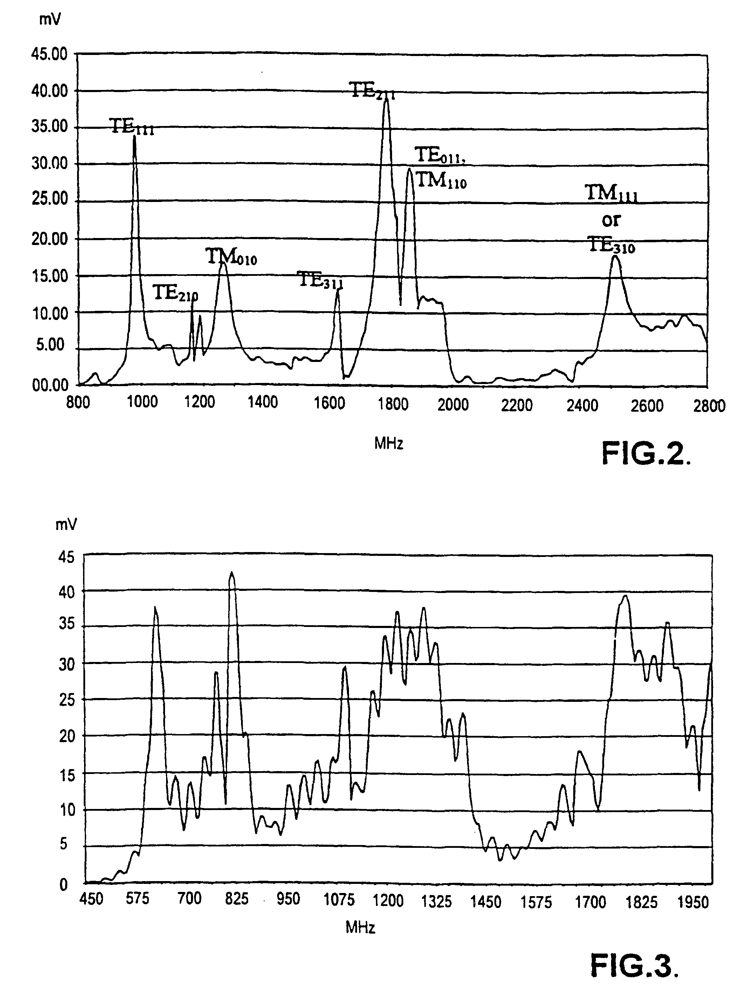

Figs. 2, 3 and 4 are the observed spectra for cavities filled with gas, oil and water respectively (established during preliminary testing of the apparatus) and show clear peaks corresponding to resonant modes of oscillation of the microwaves within the cavity.

The microwave cavity has been theoretically modelled using solutions to Maxwell's equations to clearly identify the modes of the resonances set up in the cavity. Each mode is either $TE_{mnl}$ or $TM_{mnl}$ where m represents the circumferential variations in the field pattern, n represents the radial variations of the field pattern and I represents the length variations of the field pattern. Some of the identified modes obtained by matching up the theory to the experimental measurements are marked on Fig. 2.

There is preferential excitation of the TE modes under the illustrated experimental arrangement.

Comparing the spectrum for an oil filled cavity (Fig. 3) with that of a gas filled cavity (Fig. 2) it is found that there is an observable shift in the resonance peaks of approximately 400MHz, the resonant frequencies being lower when oil is present. This is due to the higher dielectric constant of oil (2.2) compared with gas (1.0).

When the cavity is filled with water, an extreme shift of resonant frequencies occurs due to the high dielectric constant of water (approximately 80).

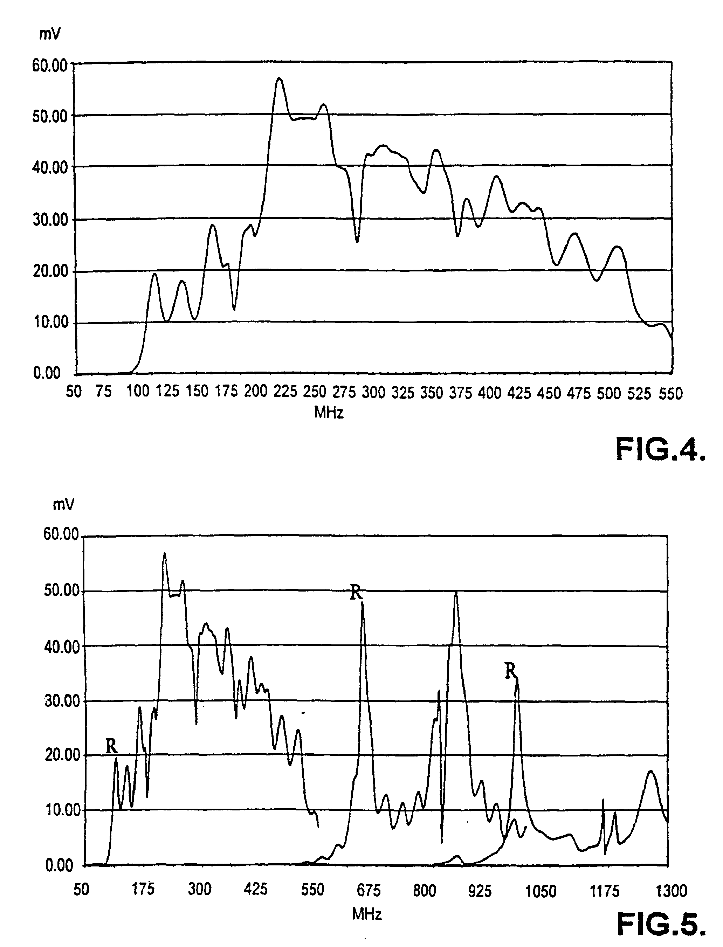

The effect of the cavity contents on the positions of the resonance peaks is illustrated most clearly in Fig. 5, on which the three curves are superimposed, the left-most curve corresponding to a water filled cavity, the centre curve corresponding to an oil filled cavity and the right-most curve corresponding to a gas filled cavity. On each curve, the label R denotes the cavity's fundamental resonant mode. Its frequency shift is clearly apparent.

Figs. 2 to 5 concern the simple cases in which only one material is present within the cavity. The inventors have however studied the more complicated case of a mixed flow, and in particular measured the effect of a range of mixed flows on the frequency of the fundamental (lowest frequency) resonant mode within the cavity.

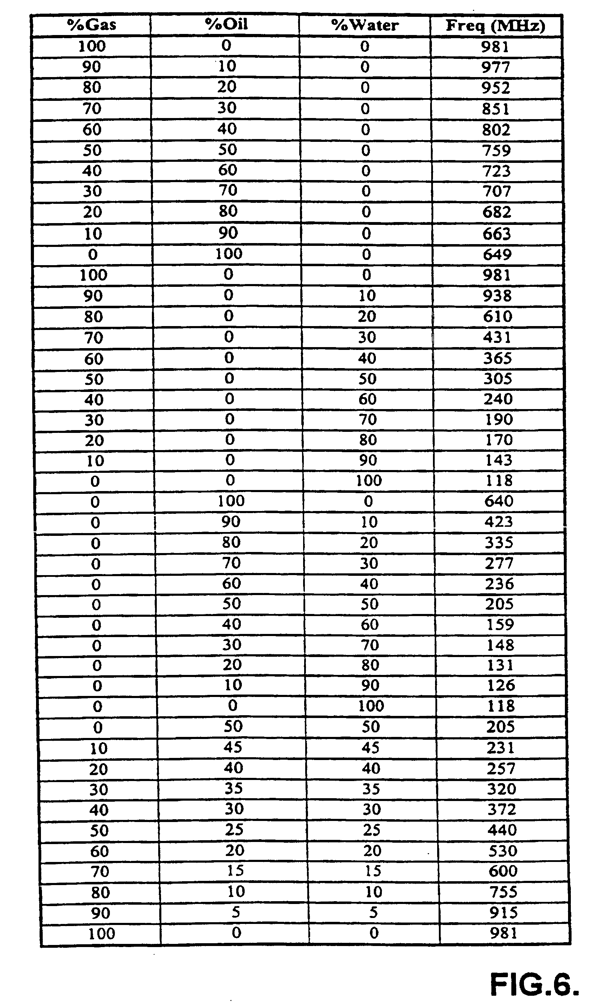

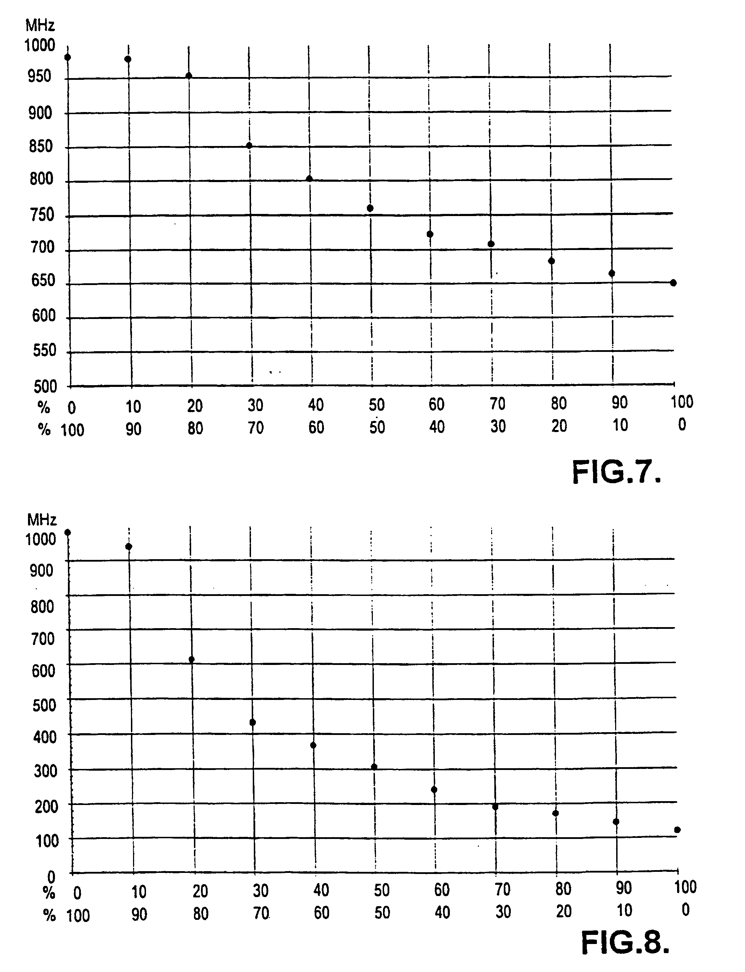

In Fig. 6, the experimentally observed frequency of the fundamental mode is tabulated against a range of proportions of gas, water and oil. The trends are more easily appreciated with reference to Figs. 7 to 10, which show:

> Fig. 7: the variation of the frequency of the fundamental mode for an oil/gas combination;
> Fig. 8: the variation of the frequency of the fundamental mode for a water/gas combination;

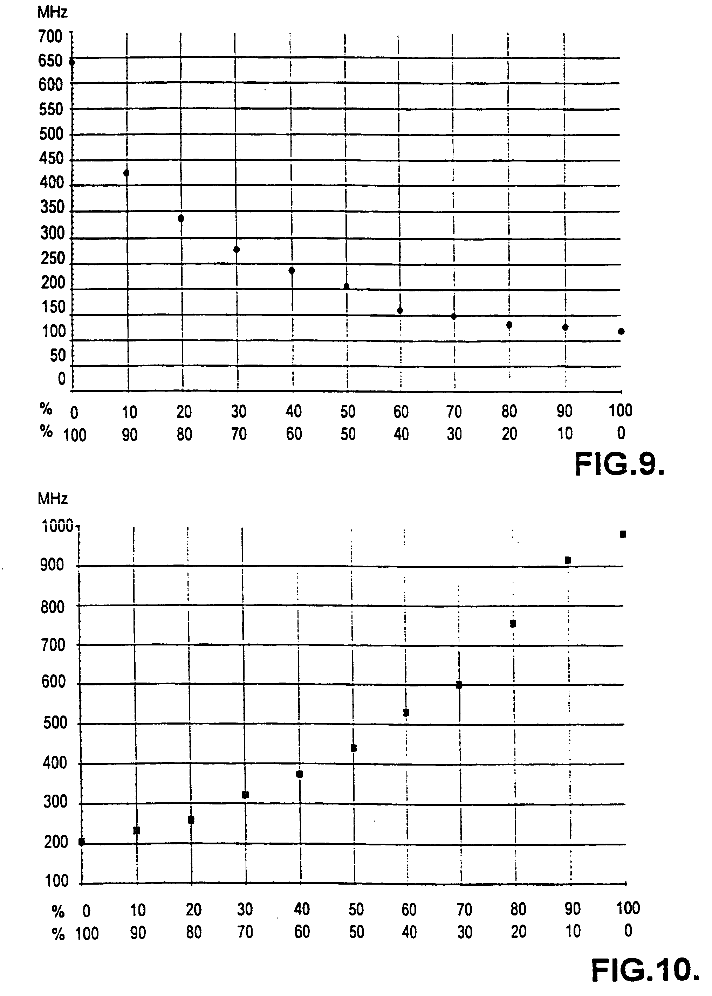

> Fig. 9: the variation of the frequency of the fundamental mode for a water/oil combination; and
> Fig. 10: the variation of the frequency of the fundamental mode for gas with a 50:50 admixture of oil and water.

The graphs are monotonic and give only a single frequency for a given mixture, under consistent conditions.

The pattern of flow within the cavity is dependent not only on the composition of the flow but also on other factors including its speed. In particular, the number and size of gas bubbles may be affected. The pattern of gas bubbles in an oil pipeline can also, for example, be affected by an expanding gas fraction at the well head, tending to generate enlarged gas "slugs".

It was anticipated that varying bubble sizes resulting from varying flow rates and other factors would cause a corresponding variation in the form of the observed microwave spectrum, but it has emerged from experiments carried out by the inventors that the spectrum depends mainly on the volumetric composition of the flow and not on the gas bubble size or speed of flow. This is clearly advantageous given the goal of assessment of the constituents of a flow whose speed and flow pattern may vary. However flow homogenisation can be used to remove effects relating to flow pattern.

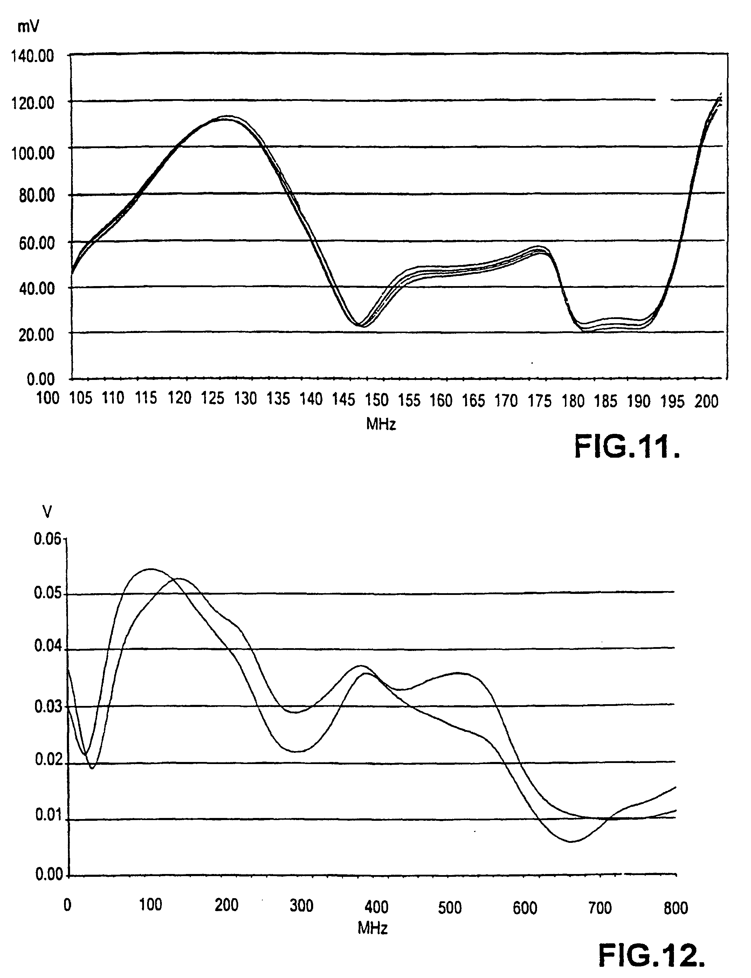

The relevant observations are graphed in Fig. 11, on which are shown four spectra corresponding to four different rates of flow of a water/gas mixture (the volumetric proportions of which were fixed at 80% water and 20% air) through the prototype apparatus, including the base of zero flow - ie. a static mixture. Even when the flow is stopped, so that the gas forms a single body above the liquid, it is found that the spectrum is largely unchanged.

To assess the possible effect of further constituents in the flow (in addition to oil, gas and water) experiments have been carried out in which a proportion of sand is added. The results are graphed in Fig 12, where curve A was obtained when the cavity contained only water while curve B was obtained using 95 % water with 5 % sand. The dielectric constant of sand is approximately 4.5, and the sand therefore caused a detectable shift in the first resonance peak.

Temperature dependence of the resonance peaks has been studied using a cavity filled with water and pumped at a constant speed. As the temperature is increased it is found that the frequency of the first peak increases. The effect is caused by a decrease in the value of the dielectric constant $\in$ with increasing temperature. The velocity of microwaves in water depends on the square root of the relative permittivity as follows.

$$\nu = \frac{C}{\sqrt{\varepsilon}}$$

The frequency within the cavity is proportional to the velocity of the microwave so that if the cavity resonates at 150MHz at 30°C, the same cavity will resonate at 161MHz at 60°C.

As an aid to the automation of the sensor system the phase relationship between the input and output signals for the cavity has been investigated. The input signal was provided by a Signal Generator (frequency range 10kHz - 1GHz) and the output signal was recorded on a Signal Analyser (frequency range up to 10GHz). The phase delay is found to vary between 0 and -360° and is periodic when higher phase delays are present at the higher frequencies.

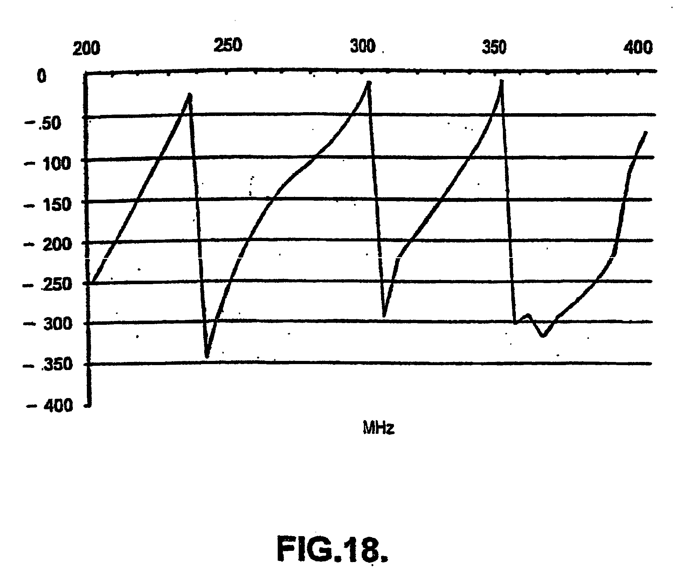

Results given in Figure 18 show the periodic structure observed for measurements in the cavity system for mixtures of oil and water. The phase shift is periodic and represents the resonance structure found within the amplitude signals at the receiver. If the resonance is modelled on a fourth order linear differential equation then the resonance should occur when the phase shift is -180° between the input and output signals.

The conclusion to this experiment is that phase may be used to indicate the presence of a resonance frequency. This technique is useful to obtain the position of the first resonance frequency of the system and therefore provides consistent training data for the neural network. When using the sensor system the position of the resonance frequency of an unknown mixture can be obtained by recording the frequency when the phase shift is -180°C from the first phase resonance curve.

The overall effect of all of the abovedescribed experiments is to confirm that the microwave spectrum observed by use of apparatus of the general type illustrated in Fig. 1 can provide useful information relevant to the determination of the constitution of a multi-phase flow.

It is of course necessary, in a practical situation, to be able to infer from measured data concerning the flow (including the microwave spectrum) the proportions of the flow constituents. In the system described herein, this is achieved by means of a Neural Network.

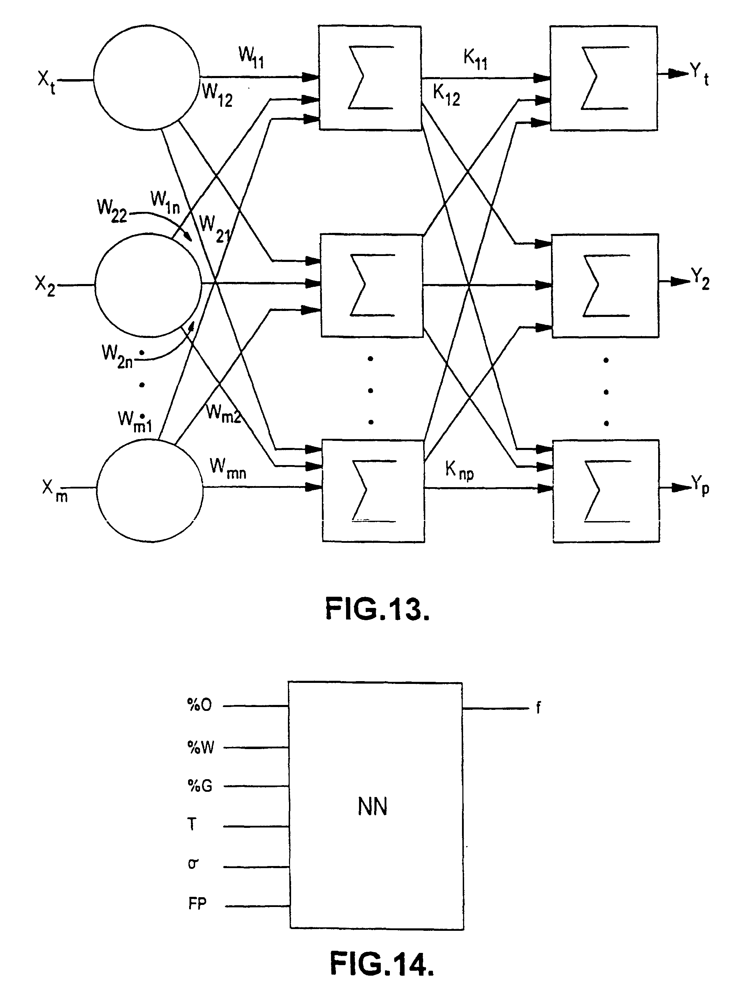

The Neural Network of the existing system has been implemented using the C++ language. The currently preferred one hidden layer Network is illustrated in Fig. 13 and is specified in terms of input, number of modes in the hidden layers and outputs. The weighting coefficients Wmn and Knp for each mode are calculated.

A two layered backpropagation (MLP) network was used. A logsig function was used for each of the layers because it constrains the outputs to positive values only. The number of hidden layers was chosen arbitrarily at first and then modified to decrease training time/accuracy for the network. It was also decided to use a backpropagation network with momentum and adaptive learning. These functions allow the Sum Squared Error to escape from "local minima" which occur in some of the error surface graphs.

Without this "momentum", the network may become stuck in local minima and will not train to the actual minimum.

In known manner, the Neural Network is trained by reference to a body of experimental data. The various parameters input to the Network NN during training are seen in Fig. 14 and are: percentage of oil 0, percentage of water W, percentage of gas G, temperature T, water conductivity σ, flow pattern FP and frequency F. Fluid pressure may additionally be calculated and input to the Network, since the volume of gas - and hence the microwave properties - are pressure dependent.

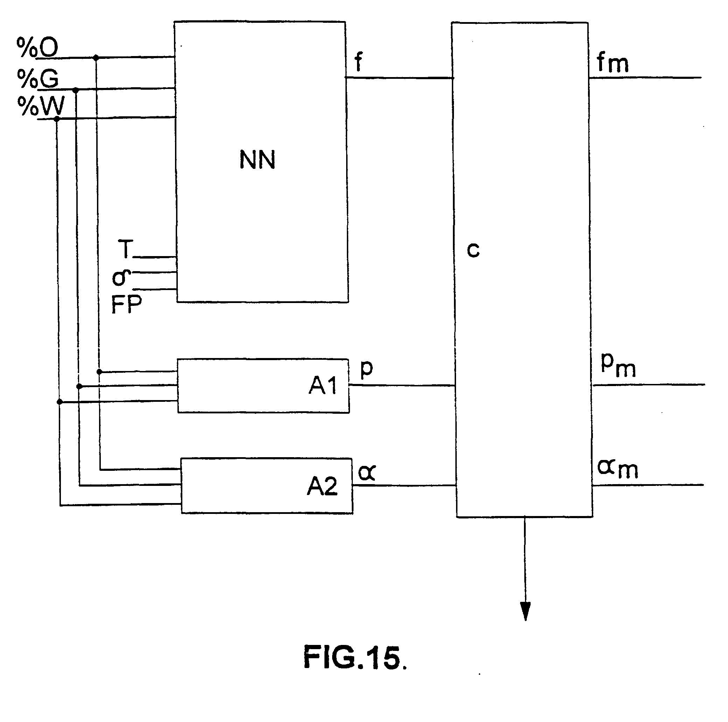

The trained Network is then utilised within a predictive algorithm whose functional elements are illustrated in Fig. 15. Because of the high speed of the computer used to implement the algorithm, it is possible to scan all expected combinations of oil, gas and water within the flow. The combinations are input, as seen toward the left of the drawing, to the Neural Network NN which provides a corresponding predicted value f for the frequency of the cavity's fundamental mode of oscillation.

The combinations are also input to functional units A1, A2 which calculate, analytically, the corresponding values of the flow density ρ and the absorption of gamma rays, α.

The resulting derived values for f, α and ρ are then output to a comparator C which also receives the measured values $f_m$, $\rho_m$, $\alpha_m$ of the same parameters.

The comparator selects the best fit of the derived values for f, α and ρ to the observed values of the same parameters, and on this basis makes a determination of the oil, gas and water proportions.

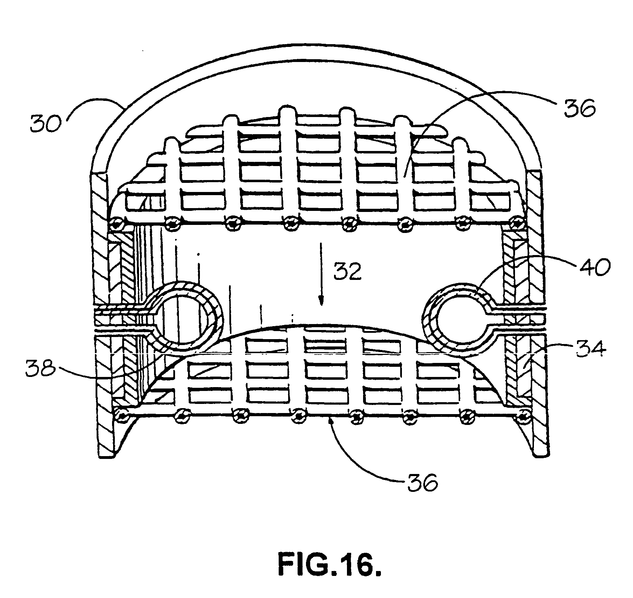

The arrangement illustrated in Fig. 1 has been used in the laboratory for testing purposes. Fig. 16 illustrates schematically an arrangement intended for incorporation in an oil extraction pipeline. The cylindrical pipeline wall is seen at 30, the direction of flow being indicated by arrow 32. The resonant electromagnetic cavity is defined by a conductive liner 34 on the interior of the pipeline wall, the ends of the liner being provided with conductive grids 36 which allow flow of material while still defining the extent of the cavity. A microwave transmitter 38 and a microwave receiver 40 are again provided, and as in the Fig. 1 embodiment the "walls" of the cavity, the emitter and the receiver are electrically insulated from the contents of the cavity.

It is possible to dispense with the grids 36, so that the liner 34 alone defines the resonant cavity, in which case certain modes of oscillation are lost but some remain and may be measured as before.

The embodiments of the invention illustrated in Figs. 1 and 16 utilise a receiver separate from the emitter, thereby measuring EM microwave energy input to the cavity as a function of frequency.

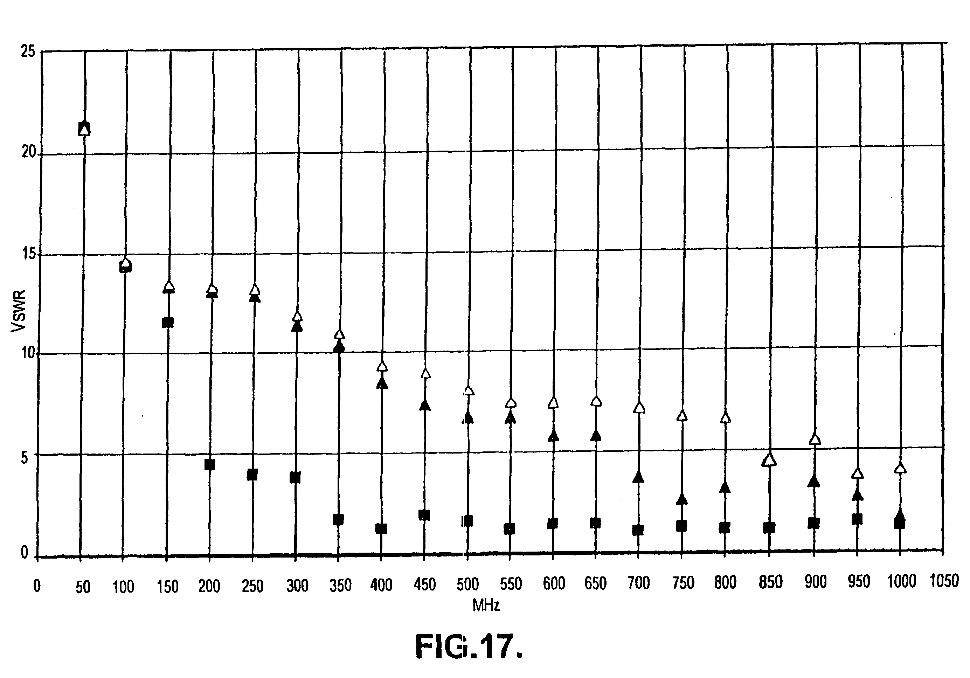

An alternative is to observe the reflected power at the transmitting antenna. This is observed by measuring the antenna's voltage standing wave ratio (VSWR). This has been done experimentally. A summary of the results taken separately in oil, gas and water are given in Fig. 17. At the lower frequencies the VSWR is sensitive to the presence of water, at medium frequencies it is sensitive to the presence of oil whilst only at high frequencies is the VSWR sensitive to the presence of gas. It is believed that the VSWR may be used as a rough indicator of the mixture composition.

**Claims**

1. An apparatus for determining dielectric properties of an electrically conductive liquid, comprising:-

    an electromagnetically resonant cavity defined by an electrically conductive boundary wall (2, 4);
    an electrically insulating layer (14) disposed on those parts of the electrically conductive boundary wall defining the interior wall of the cavity;
    an inlet (6) through which the fluid can be introduced into the interior of the cavity, said electrically insulating layer isolating the fluid from said electrically conductive boundary wall;
    an emitter antenna (10, 38) and associated drive electronics for emitting electromagnetic radiation to the cavity, the emitter antenna being electrically isolated from fluid material within the cavity; and
means (12, 40) for detecting resultant electromagnetic radiation within the cavity.

2. An apparatus as claimed in claim 1 wherein the drive electronics are adapted to operate at a range of frequencies such that a range of frequencies of electromagnetic radiation can be emitted to the cavity.

3. An apparatus as claimed in claim 2, wherein the frequency is continuously variable.

4. An apparatus as claimed in any preceding claim, wherein the antenna (10, 38) for emitting electromagnetic radiation into the fluid material is disposed within the resonant cavity such as to project into the fluid material, the antenna being provided with an insulating layer (16) by which it is electrically isolated from the fluid material.

5. An apparatus as claimed in any preceding claim wherein the resonant cavity has an inlet (6) and an outlet (8) such that the fluid material can flow through the cavity.

6. An apparatus as claimed in any preceding claim wherein the means for detecting electromagnetic radiation within the cavity comprise a receiver antenna (12, 40) disposed within the resonant cavity and electrically isolated from the fluid material within the cavity.

7. An apparatus as claimed in any of claims 1 to 5 wherein the means for detecting electromagnetic energy within the cavity comprise electronics connected to the emitter antenna for measuring the voltage standing wave ratio.

8. A device for monitoring constituents of a fluid flow comprising an apparatus as claimed in any preceding claim.

9. A device as claimed in claim 8, further comprising measurement electronics for determining the frequency of a resonance peak corresponding to a selected resonant mode within the cavity.

10. A device as claimed in claim 8 or claim 9, further comprising means for measuring additional properties of the fluid flow and calculating means for determining, on the basis of the measured properties, the proportions of certain constituents of the flow.

11. A device as claimed in claim 10, wherein the calculating means operates by calculating for a set of possible permutations of flow constituents the expected values of the measured properties and comparing these with the actual measured values to determine which permutation best matches the measured properties.

12. A device as claimed in claim 11, wherein the calculating means comprise a neural network trained on experimental data, for determining expected quantities relating to the dielectric properties of the flow corresponding to the permutations of flow constituents.

13. A method of determining dielectric properties of an electrically conductive fluid comprising the steps of disposing the fluid material in or passing the fluid through an apparatus in accordance with claim 1, emitting electromagnetic radiation into the resonant cavity by means of the antenna which is electrically isolated from the fluid and detecting and analysing the resultant electromagnetic radiation within the resonant cavity.

14. A method as claimed in claim 13, comprising varying the frequency of the emitted electromagnetic radiation and obtaining an indication of the amplitude of the resultant electromagnetic radiation within the resonant cavity.

**Patentansprüche**

1. Vorrichtung zum Ermitteln von dielektrischen Eigenschaften einer elektrisch leitenden Flüssigkeit, wobei die Vorrichtung Folgendes umfasst:

einen elektromagnetisch resonanten Hohlraum, der von einer elektrisch leitenden Begrenzungswand (2, 4) definiert wird;
eine elektrisch isolierende Schicht (14), die an denjenigen Teilen der elektrisch leitenden Begrenzungswand angeordnet ist, die die Innenwand des Hohlraums definieren;
einen Einlass (6), durch den Fluid ins Innere des Hohlraums geleitet werden kann, wobei die genannte elektrisch isolierende Schicht das Fluid von der genannten elektrisch leitenden Begrenzungswand isoliert;
eine Emitterantenne (10, 38) und zugehörige Ansteuerungselektronik zum Emittieren von elektromagnetischer Strahlung zu dem Hohlraum, wobei die Emitterantenne elektrisch von Fluidmaterial in dem Hohlraum isoliert wird; und
Mittel (12, 40) zum Erkennen von resultierender elektromagnetischer Strahlung in dem Hohlraum.

2. Vorrichtung nach Anspruch 1, wobei die Ansteuerungselektronik so ausgelegt ist, dass sie in einem solchen Frequenzbereich arbeitet, dass ein Bereich von Frequenzen von elektromagnetischer Strahlung zum Hohlraum emittiert werden kann.

3.  Vorrichtung nach Anspruch 2, wobei die Frequenz stufenlos veränderlich ist.

4.  Vorrichtung nach einem der vorherigen Ansprüche, wobei die Antenne (10, 38) zum Emittieren von elektromagnetischer Strahlung in das Fluidmaterial so in dem resonanten Hohlraum angeordnet ist, dass sie in das Fluidmaterial vorsteht, wobei die Antenne mit einer isolierenden Schicht (16) versehen ist, durch die sie von dem Fluidmaterial elektrisch isoliert ist.

5.  Vorrichtung nach einem der vorherigen Ansprüche, wobei der resonante Hohlraum einen Einlass (6) und einen Auslass (8) hat, so dass das Fluidmaterial durch den Hohlraum strömen kann.

6.  Vorrichtung nach einem der vorherigen Ansprüche, wobei das Mittel zum Erkennen von elektromagnetischer Strahlung in dem Hohlraum eine Empfangsantenne (12, 40) umfasst, die in dem resonanten Hohlraum angeordnet und von dem Fluidmaterial im Hohlraum elektrisch isoliert ist.

7.  Vorrichtung nach einem der Ansprüche 1 bis 5, wobei die Mittel zum Erkennen von elektromagnetischer Energie in dem Hohlraum Elektronik umfassen, die mit der Emitterantenne verbunden ist, um das Spannungs-Stehwellenverhältnis zu messen.

8.  Gerät zum Überwachen von Bestandteilen eines Fluidstroms, umfassend eine Vorrichtung nach einem der vorherigen Ansprüche.

9.  Gerät nach Anspruch 8, ferner umfassend Messelektronik zum Ermitteln der Frequenz eines Resonanzpeaks, der einer gewählten Resonatormode in dem Hohlraum entspricht.

10. Gerät nach Anspruch 8 oder Anspruch 9, ferner umfassend Mittel zum Messen zusätzlicher Eigenschaften des Fluidstroms und Rechenmittel, um auf der Basis der gemessenen Eigenschaften die Anteile bestimmter Bestandteile des Stroms zu ermitteln.

11. Gerät nach Anspruch 10, wobei die Funktionsweise des Rechenmittels darin besteht, für einen Satz von möglichen Permutationen von Strömungsbestandteilen die erwarteten Werte der gemessenen Eigenschaften zu berechnen und diese mit den tatsächlichen Messwerten zu vergleichen, um zu ermitteln, welche Permutation am besten mit den gemessenen Eigenschaften übereinstimmt.

12. Gerät nach Anspruch 11, wobei das Rechenmittel ein an Versuchsdaten trainiertes neuronales Netzwerk umfasst, um erwartete Mengen in Bezug auf die dielektrischen Eigenschaften des Stroms zu ermitteln, die den Permutationen von Strömungsbestandteilen entsprechen.

13. Verfahren zum Ermitteln von dielektrischen Eigenschaften eines elektrisch leitenden Fluids, umfassend die folgenden Schritte: Einleiten des Fluidmaterials in oder Leiten des Fluids durch eine Vorrichtung nach Anspruch 1, Emittieren von elektromagnetischer Strahlung in den resonanten Hohlraum mittels der Antenne, die von dem Fluid elektrisch isoliert ist, und Erkennen und Analysieren der resultierenden elektromagnetischen Strahlung in dem resonanten Hohlraum.

14. Verfahren nach Anspruch 13, umfassend das Variieren der Frequenz der emittierten elektromagnetischen Strahlung und Erhalten einer Anzeige für die Amplitude der resultierenden elektromagnetischen Strahlung in dem resonanten Hohlraum.

**Revendications**

1.  Appareil pour déterminer les propriétés diélectriques d'un liquide électriquement conducteur, comprenant :-

    une cavité résonnante électromagnétique définie par une paroi limite conductrice d'électricité (2, 4) ;
    une couche d'isolation électrique (14) disposée sur les parties de la paroi limite conductrice d'électricité définissant la paroi intérieure de la cavité ;
    une entrée (6) à travers laquelle le fluide peut être introduit dans l'intérieur de la cavité, ladite couche d'isolation électrique isolant le fluide de ladite paroi limite conductrice d'électricité ;
    une antenne émettrice (10, 38) et les circuits électroniques de commande associés pour émettre un rayonnement électromagnétique vers la cavité, cette antenne émettrice étant isolée électriquement de la matière fluide à l'intérieur de la cavité ; et
    un moyen (12, 40) pour détecter le rayonnement électromagnétique en résultant à l'intérieur de la cavité.

2.  Appareil selon la revendication 1 dans lequel les circuits électroniques de commande sont adaptés pour fonctionner à une gamme de fréquences telle qu'une gamme de fréquences de rayonnement électromagnétique puisse être émise vers la cavité.

**3.** Appareil selon la revendication 2, dans lequel la fréquence est continuellement variable.

**4.** Appareil selon l'une quelconque des revendications précédentes, dans lequel l'antenne (10, 38) pour émettre le rayonnement électromagnétique dans la matière fluide est disposée à l'intérieur de la cavité résonnante de façon à faire saillie dans la matière fluide, cette antenne étant pourvue d'une couche isolante (16) par laquelle elle est isolée électriquement de la matière fluide.

**5.** Appareil selon l'une quelconque des revendications précédentes, dans lequel la cavité résonnante a une entrée (6) et une sortie (8) telles que la matière fluide puisse s'écouler à travers la cavité.

**6.** Appareil selon l'une quelconque des revendications précédentes, dans lequel le moyen pour détecter un rayonnement électromagnétique à l'intérieur de la cavité comprend une antenne réceptrice (12, 40) disposée à l'intérieur de la cavité résonnante et isolée électriquement de la matière fluide à l'intérieur de la cavité.

**7.** Appareil selon l'une quelconque des revendications 1 à 5 dans lequel le moyen pour détecter l'énergie électromagnétique à l'intérieur de la cavité comprend des circuits électroniques connectés à l'antenne émettrice pour mesurer le rapport d'ondes stationnaires de tension.

**8.** Dispositif pour contrôler les constituants d'un écoulement de fluide comprenant un appareil selon l'une quelconque des revendications précédentes.

**9.** Dispositif selon la revendication 8, comprenant également des circuits électroniques de mesure pour déterminer la fréquence d'un pic de résonance correspondant à un mode résonnant sélectionné à l'intérieur de la cavité.

**10.** Dispositif selon la revendication 8 ou la revendication 9, comprenant également un moyen pour mesurer les propriétés supplémentaires de l'écoulement de fluide et un moyen de calcul pour déterminer les proportions de certains constituants de l'écoulement en se basant sur les propriétés mesurées.

**11.** Dispositif selon la revendication 10, dans lequel le moyen de calcul fonctionne en calculant, pour un ensemble de permutations possibles de constituants de l'écoulement, les valeurs attendues des propriétés mesurées et en comparant ces valeurs avec les valeurs réelles mesurées afin de déterminer quelle permutation correspond le mieux aux propriétés mesurées.

**12.** Dispositif selon la revendication 11, dans lequel le moyen de calcul comprend un réseau neuronal formé sur des données expérimentales, pour déterminer les quantités attendues relatives aux propriétés diélectriques de l'écoulement correspondant aux permutations des constituants de l'écoulement.

**13.** Méthode pour déterminer les propriétés diélectriques d'un fluide conducteur d'électricité comprenant les étapes suivantes : disposer la matière fluide dans un appareil selon la revendication 1 ou la faire traverser un tel appareil, émettre un rayonnement électromagnétique dans la cavité résonnante au moyen de l'antenne qui est isolée électriquement du fluide et détecter et analyser le rayonnement électromagnétique en résultant au sein de la cavité résonnante.

**14.** Méthode selon la revendication 13, comprenant la variation de la fréquence du rayonnement électromagnétique émis et l'obtention d'une indication de l'amplitude du rayonnement électromagnétique en résultant dans la cavité résonnante.

**FIG.1.**

FIG.2.

FIG.3.

12

mV

**FIG.4.**

mV

**FIG.5.**

| %Gas | %Oil | %Water | Freq (MHz) |
|------|------|--------|------------|
| 100 | 0 | 0 | 981 |
| 90 | 10 | 0 | 977 |
| 80 | 20 | 0 | 952 |
| 70 | 30 | 0 | 851 |
| 60 | 40 | 0 | 802 |
| 50 | 50 | 0 | 759 |
| 40 | 60 | 0 | 723 |
| 30 | 70 | 0 | 707 |
| 20 | 80 | 0 | 682 |
| 10 | 90 | 0 | 663 |
| 0 | 100 | 0 | 649 |
| 100 | 0 | 0 | 981 |
| 90 | 0 | 10 | 938 |
| 80 | 0 | 20 | 610 |
| 70 | 0 | 30 | 431 |
| 60 | 0 | 40 | 365 |
| 50 | 0 | 50 | 305 |
| 40 | 0 | 60 | 240 |
| 30 | 0 | 70 | 190 |
| 20 | 0 | 80 | 170 |
| 10 | 0 | 90 | 143 |
| 0 | 0 | 100 | 118 |
| 0 | 100 | 0 | 640 |
| 0 | 90 | 10 | 423 |
| 0 | 80 | 20 | 335 |
| 0 | 70 | 30 | 277 |
| 0 | 60 | 40 | 236 |
| 0 | 50 | 50 | 205 |
| 0 | 40 | 60 | 159 |
| 0 | 30 | 70 | 148 |
| 0 | 20 | 80 | 131 |
| 0 | 10 | 90 | 126 |
| 0 | 0 | 100 | 118 |
| 0 | 50 | 50 | 205 |
| 10 | 45 | 45 | 231 |
| 20 | 40 | 40 | 257 |
| 30 | 35 | 35 | 320 |
| 40 | 30 | 30 | 372 |
| 50 | 25 | 25 | 440 |
| 60 | 20 | 20 | 530 |
| 70 | 15 | 15 | 600 |
| 80 | 10 | 10 | 755 |
| 90 | 5 | 5 | 915 |
| 100 | 0 | 0 | 981 |

## FIG.6.

FIG.7.

FIG.8.

FIG.9.

FIG.10.

mV

FIG.11.

V

FIG.12.

**FIG.13.**

**FIG.14.**

EP 1 144 985 B1

FIG.15.

**FIG.16.**

FIG.17.

FIG.18.